# EUROPEAN PATENT SPECIFICATION

(11) **EP 2 787 516 B1**
(45) Date of publication and mention of the grant of the patent: **09.01.2019**
(21) Application number: 11876633.6
(22) Date of filing: 29.11.2011
(51) Int. Cl.: H01F 29/02, B60L 9/24

(54) **TRANSFORMER AND TRANSFORMER DEVICE INCLUDING SAME**
TRANSFORMATOR UND TRANSFORMATIONSVORRICHTUNG DAMIT
TRANSFORMATEUR, ET DISPOSITIF DE TRANSFORMATEUR COMPRENANT LEDIT TRANSFORMATEUR

(43) Date of publication of application: 08.10.2014
(73) Proprietor: Mitsubishi Electric Corporation, Tokyo 100-8310 (JP)
(72) Inventor: NODA, Toshihiro, Tokyo 100-8310 (JP); KOBAYASHI, Nobumasa, Tokyo 100-8310 (JP)
(74) Representative: Sajda, Wolf E.
(86) International application number: PCT/JP2011/077532
(87) International publication number: WO 2013/080298

(56) References cited:
- EP-A1- 1 315 180
- JP-A- 2007 258 106
- JP-A- 2009 182 115
- JP-B- S3 822 905
- US-A1- 2009 219 007

## Description

### TECHNICAL FIELD

The present invention relates to a transformer and a transformer device including the same, and in particular, relates to a transformer and a transformer device including the same mounted in an electric vehicle.

### BACKGROUND ART

In a railway vehicle and a railway track therefor, signals are being used in various frequency bands. Further, a transformer device mounted in a railway vehicle generates harmonic current noise having a frequency higher than the rated frequency of a transformer. Harmonic current noise flows into the return line through the transformer. Therefore, it is necessary to prevent the harmonic current noise from causing inductive interferences to various signals.

The reactance value of a transformer is an important parameter to suppress the occurrence of inductive interferences. Since the harmonic current noise occurred in a converter, an inverter and the like disposed in the transformer device flows into the return line through the transformer, the magnitude of the harmonic current noise is dependent on the reactance value of the transformer. Moreover, the reactance value of the transformer is a very important factor in controlling the transformer device stable.

As a prior art, Japanese Patent Laid-Open JP-A-2009-182 115 (PTD 1) has disclosed a transformer which can obtain a high reactance value in the frequency band of harmonic components. The transformer described in PTD 1 includes a primary winding configured to receive power supply from a power collector, a secondary winding, and an auxiliary winding connected in parallel with the secondary winding.

### CITATION LIST

### PATENT DOCUMENT

PTD 1: Japanese Patent Laid-Open JP-A-2009-182 115

### SUMMARY OF THE INVENTION

### TECHNICAL PROBLEM

In order to suppress inductive interferences against signals of various frequency bands, usually a high reactance value is needed at the rated frequency of the transformer. In addition, the transformer is required to be made compact in size. Regarding the transformer described in PTD 1, although it is possible to make it compact in size, it is not possible to obtain a high reactance value at the rated frequency of the transformer.

The present invention has been accomplished in view of the aforementioned problems, and it is therefore an object of the present invention to provide a compact transformer capable of suppressing the occurrence of inductive interferences, and a transformer device including the same.

### SOLUTION TO THE PROBLEM

A transformer according to the present invention is given in independent patent claim 1 and includes a core, a primary winding wound about the core, a secondary winding wound about the core and aligned with the primary winding, and a differential winding wound about the core and connected in series with the secondary winding.

### ADVANTAGEOUS EFFECTS OF THE INVENTION

According to the present invention, it is possible to provide a transformer and a transformer device capable of suppressing the occurrence of inductive interferences and making them compact in size.

### BRIEF DESCRIPTION OF THE DRAWINGS

- FIG. 1: is a circuit diagram illustrating a configuration of a railway vehicle mounted with a transformer device according to an embodiment of the present invention;
- FIG. 2: is a perspective view illustrating the outer appearance of the transformer according to the embodiment;
- FIG. 3: is a sectional view which is taken along a line III-III and viewed from the arrow direction in FIG. 2 and illustrates a current and a magnetic flux generated in the transformer when a differential winding is not incorporated into a closed circuit;
- FIG. 4(A): is a sectional view which is viewed from a window of one of the cores and illustrates a magnetic flux generated in the transformer when the differential winding is not incorporated into the closed circuit;
- FIG. 4(B): is a graph illustrating a leakage flux generated in the core when the differential winding is not incorporated into the closed circuit;
- FIG. 5: is a sectional view which is viewed from the same direction as FIG. 3 and illustrates a current and a magnetic flux generated in the transformer after the differential winding has been incorporated into the closed circuit;
- FIG. 6(A): is a sectional view which is viewed from a window of one of the cores and illustrates a magnetic flux generated in the transformer after the differential winding has been incorporated into the closed circuit;
- FIG. 6(B): is a graph illustrating a leakage flux generated in the core after the differential winding has been incorporated into the closed circuit;
- FIG. 7: is a schematic diagram illustrating a configuration of the differential winding according to the present embodiment;
- FIG. 8(A): is a sectional view which is viewed from a window of one of the cores and illustrates a magnetic flux generated in the transformer when the number of turns of the differential winding incorporated into the closed circuit is altered stepwise; and
- FIG. 8(B): is a graph illustrating a leakage flux generated in the core when the number of turns of the differential winding incorporated into the closed circuit is being altered stepwise.

### DESCRIPTION OF EMBODIMENTS

Hereinafter, a transformer and a transformer device including the same according to an embodiment of the present invention will be described with reference to the drawings. It should be noted that in the following description of the present embodiment, the same or equivalent portions in the drawings will be given the same reference signs and the description thereof will not be repeated.

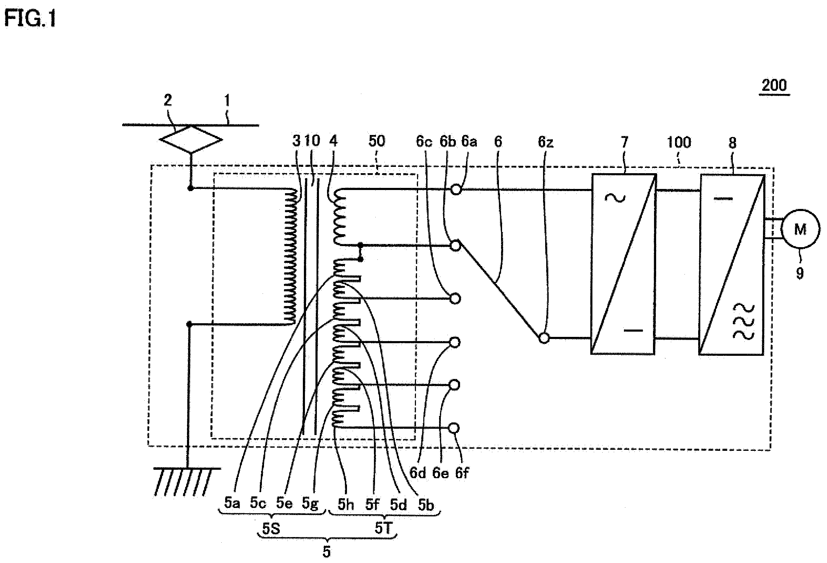

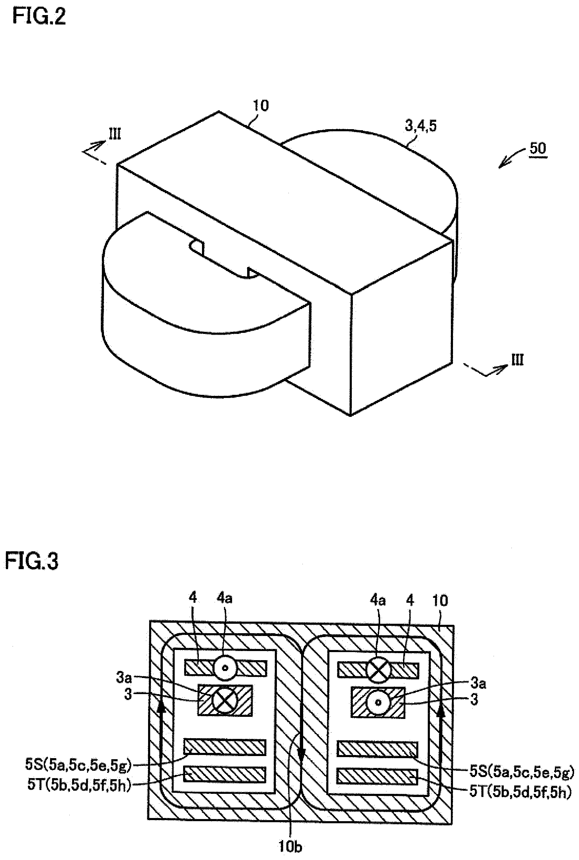

FIG. 1 is a circuit diagram illustrating a configuration of a railway vehicle mounted with the transformer device according to an embodiment of the present invention. FIG. 2 is a perspective view illustrating the outer appearance of the transformer according to the embodiment. FIG. 3 is a sectional view which is taken along a line III-III and viewed from the arrow direction in FIG. 2 and illustrates a current and a magnetic flux generated in the transformer when a differential winding is not incorporated into a closed circuit.

As illustrated in FIGS. 1 to 3, a railway vehicle 200 is an electric vehicle and is equipped with a pantograph 2, a transformer device 100, and a motor 9. The transformer device 100 includes a transformer 50, a converter 7, an inverter 8, and a switch 6. The transformer 50 includes a primary winding 3, a secondary winding 4, a differential winding 5, and a core 10.

The pantograph 2 is connected to an elevated cable 1. The primary winding 3 includes a first terminal connected to pantograph 2 and a second terminal disposed opposite to the first terminal and connected to a ground node grounded to earth. The primary winding 3 is wound about core 10. The core 10 is disposed with two windows.

The secondary winding 4 is magnetically coupled to the primary winding 3. Specifically, the secondary winding 4 is wound about the core 10 in parallel with the primary winding 3. The secondary winding 4 has a terminal 6a disposed at one end of the secondary winding 4 and a terminal 6b disposed at the other end of the secondary winding 4. The terminal 6a is connected to a first input terminal of converter 7.

The differential winding 5 is magnetically coupled to the primary winding 3. Specifically, the differential winding 5 is wound about the core 10, sandwiching the secondary winding 4 with the primary winding 3, and is connected with the secondary winding 4 in series. It should be noted that the disposition of the differential winding 5 is not limited to the above, and it is acceptable for it to be disposed outside either the primary winding 3 or the secondary winding 4.

The differential winding 5 includes two windings 5S and 5T which are wound about the core 10 at the same number of turns in opposite directions and each of which has a winding start portion and a winding end portion. In the present embodiment, the winding 5S is configured to include a plurality of conductors 5a, 5c, 5e and 5g. Winding 5T is configured to include a plurality of conductors 5b, 5d, 5f and 5h. It should be noted that the number of conductors included in each of the windings 5S and 5T may be one or more as long as they are equal to each other.

The differential winding 5 includes the terminal 6b disposed at one end of the differential winding 5, terminals 6c, 6d and 6e disposed in the middle thereof, and a terminal 6f disposed at the other end of the differential winding 5, which are configured to be connected by the switch 6 alternatively. In other words, the terminal 6b is shared by the secondary winding 4 and the differential winding 5.

The switch 6 is configured to selectively incorporate the differential winding 5 into a closed circuit including the secondary winding 4. In other words, the switch 6 connects a terminal 6z, which is in connected with a second input terminal of converter 7, to any one of the terminals 6b, 6c, 6d, 6e and 6f alternatively to switch the state of whether or not to incorporate the differential winding 5 into the closed circuit including the secondary winding 4.

As illustrated in FIG. 1, in the case where the terminal 6b and the terminal 6z are connected by the switch 6, no AC current flows in the windings 5S and 5T as illustrated in FIG. 3. This means that in such a state the differential winding 5 is not incorporated into the closed circuit including the secondary winding 4.

A single-phase AC voltage is supplied from elevated cable 1 to the primary winding 3 via pantograph 2. When the AC voltage is supplied to the primary winding 3, as illustrated in FIG. 3, an AC current 3a flows in the primary winding 3. Thus, a main magnetic flux 10b is generated in the core 10.

The main magnetic flux 10b generated in the core 10 induces an AC voltage in the secondary winding 4 in accordance with a ratio between the number of turns of the primary winding 3 and the number of turns of the secondary winding 4, and thereby, an AC current 4a flows in the secondary winding 4.

As described above, the differential winding 5 includes two windings 5S and 5T which are wound about the core 10 at the same number of turns in opposite directions. Thus, an AC voltage induced in the winding 5S and an AC voltage induced in the winding 5T by main magnetic flux 10b generated in the core 10 are canceled by each other, and accordingly, no electric voltage is present between the terminal 6b of the differential winding 5 and each terminal of the terminals 6c, 6d, 6e and 6f.

The converter 7 converts the AC voltage induced in the secondary winding 4 to a DC voltage. The inverter 8 converts the DC voltage received from the converter 7 to a three--phase AC voltage and outputs it to motor 9. The motor 9 is driven by the three-phase AC voltage received from the inverter 8.

Hereinafter, the reactance of the transformer 50 according to the present embodiment will be described.

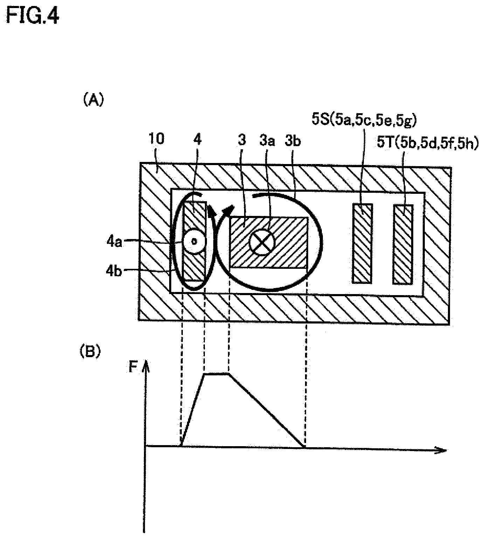

FIG. 4(A) is a sectional view which is viewed from a window of one of the cores and illustrates a magnetic flux generated in the transformer when the differential winding is not incorporated into the closed circuit, and FIG. 4(B) is a graph illustrating a leakage flux generated in the core when the differential winding is not incorporated into the closed circuit. In FIG. 4(B), the vertical axis denotes the magnitude of leakage flux F, and the horizontal axis denotes positions corresponding to the core illustrated in FIG. 4(A).

As illustrated in FIG. 4(A), a leakage flux 3b is generated by AC current 3a flowing in the primary winding 3, and a leakage flux 4b is generated by AC current 4a flowing in the secondary winding 4. As a result, as illustrated in FIG. 4(B), leakage flux F is generated in the core 10, which makes it possible to obtain a reactance.

With the help of the reactance, it is possible to attenuate the harmonic current noise generated from the converter 7, the inverter 8 or the like disposed in the transformer device 100.

However, if the reactance is not in a proper value, it is impossible to attenuate the harmonic current noise effectively. Further, when the railway vehicle 200 is moved to another railway track using signals of a different frequency band, the frequency for suppressing the harmonic current noise varies. In such case, it is necessary to modify the reactance value of the transformer 50.

Thus, the switch 6 is switched to incorporate the differential winding 5 into the closed circuit so as to modify the reactance value of the transformer 50. Specifically, the terminal 6z is connected to any one of the terminals 6c, 6d, 6e and 6f via the switch 6.

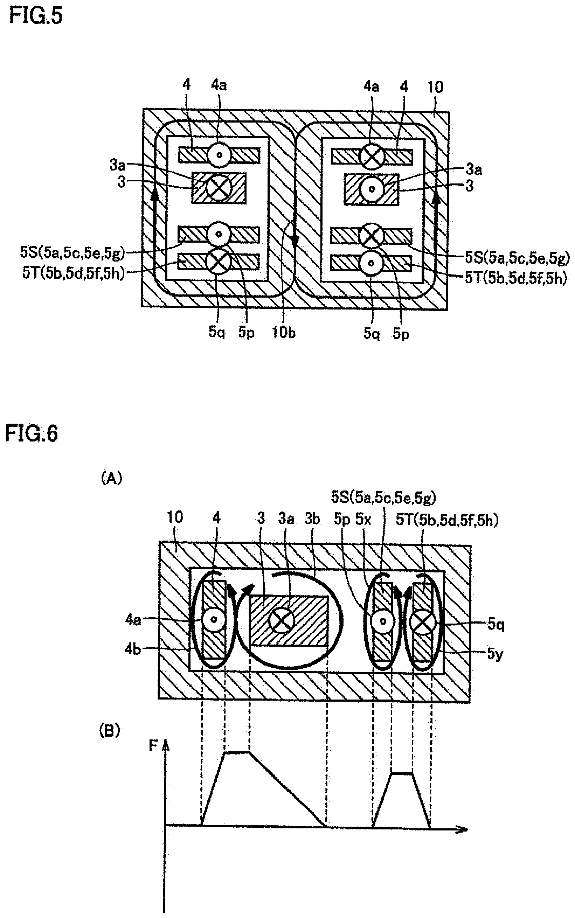

FIG. 5 is a sectional view which is viewed from the same direction as FIG. 3 and illustrates a current and a magnetic flux generated in the transformer after the differential winding has been incorporated into the closed circuit. As illustrated in FIG. 5, main magnetic flux 10b generated in the core 10 induces an AC voltage in the winding 5S of the differential winding 5 in accordance with a ratio between the number of turns of the primary winding 3 and the number of turns of the winding 5S, and thereby, an AC current 5p flows in the winding 5S.

Similarly, the main magnetic flux 10b generated in the core 10 induces an AC voltage in the winding 5T of the differential winding 5 in accordance with a ratio between the number of turns of the primary winding 3 and the number of turns of the winding 5T, and thereby, an AC current 5q flows in the winding 5T.

As described above, since the winding 5S and the winding 5T are wound about the core 10 at the same number of turns in opposite directions, AC current 5p and AC current 5q have the same value but flow in opposite directions. Thereby, AC current 5p and AC current 5q are cancelled by each other in the differential winding 5. As a result, no voltage will be generated across both ends of the differential winding 5, and thereby, the AC voltage induced in the secondary winding 4 will not be affected by the differential winding 5.

FIG. 6(A) is a sectional view which is viewed from a window of one of the cores and illustrates a magnetic flux generated in the transformer after the differential winding has been incorporated into the closed circuit, and FIG. 6(B) is a graph illustrating a leakage flux generated in the core after the differential winding has been incorporated into the closed circuit. In FIG. 6(B), the vertical axis denotes the magnitude of leakage flux F, and the horizontal axis denotes positions corresponding to the core illustrated in FIG. 6(A).

As illustrated in FIG. 6(A), a leakage flux 5x is generated by AC current 5p flowing in the winding 5S, and a leakage flux 5y is generated by AC current 5q flowing in the winding 5T. As a result, as illustrated in FIG. 6(B), leakage flux F is generated in the core 10, which makes it possible to obtain a reactance having a value higher than in the case where the differential winding 5 is not incorporated into the closed circuit.

In a conventional method, the reactance value of the transformer 50 is modified by altering the number of turns of the secondary winding 4. However, in this case, since the AC voltage induced in the secondary winding 4 also changes accordingly, the voltage applied to the converter 7 is changed thereby, which brings about problems such as the occurrence of dielectric breakdown and the control difficulty in the converter 7.

Specifically, if the AC voltage supplied to the primary winding 3 is denoted as V₁, the AC voltage induced in the secondary winding 4 is denoted as V₂, the number of turns of the primary winding 3 is denoted as N₁, and the number of turns of the secondary winding 4 is denoted as N₂, then, the following relationship holds: V₂ = N₂V₁/N₁. If the number of turns of the secondary winding 4 is increased by α, then, V₂ increases by αV₁/N₁. Thus, in the conventional method, various problems are brought about by the increment on the AC voltage induced in the secondary winding 4.

According to the transformer 50 of the present exemplary embodiment, the reactance of the transformer 50 can be modified without altering the AC voltage induced in the secondary winding 4. Therefore, it is possible to stably control the transformer device 100.

Further, since the secondary winding 4 and the differential winding 5 are connected in series in the transformer 50, it is possible to increase the winding resistance in the transformer 50 so as to increase the reactance value of the transformer 50 at the rated frequency.

As described above, in the transformer device 100 according to the present embodiment, since the transformer 50 is equipped with the differential winding 5 in series connection with the secondary winding 4, there is no need to dispose a reactor device separate from the transformer 50, which makes it possible to make the transformer device compact in size.

Furthermore, in the transformer 50 according to the present embodiment, since the differential winding 5 has the terminals 6b, 6c, 6d, 6e and 6f to be selectively connected by the switch 6, it is possible to modify the reactance value of the transformer 50 stepwise through switching the switch 6.

Hereinafter, the configuration of the differential winding 5 according to the present embodiment will be described in detail.

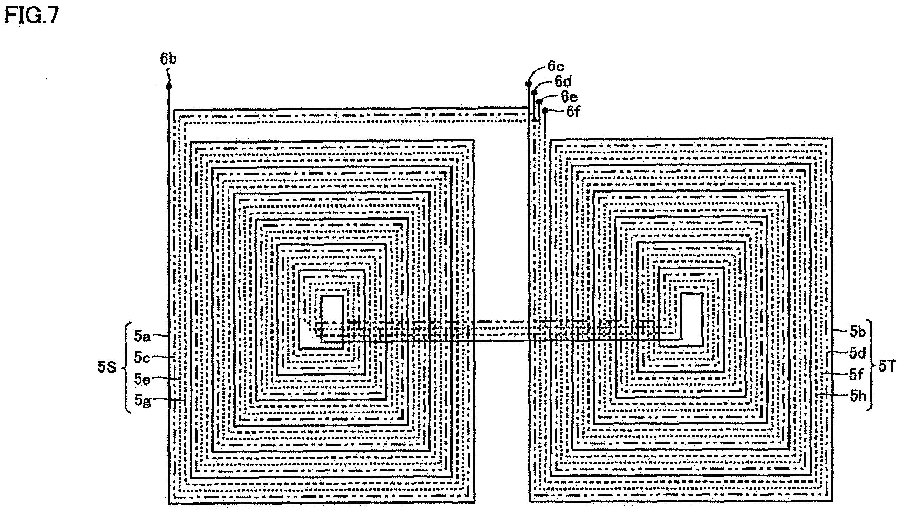

FIG. 7 is a schematic diagram illustrating the configuration of the differential winding according to the present embodiment. As illustrated in FIG. 7, the winding 5S included in the differential winding 5 is formed by continuously winding a plurality of the conductors 5a, 5c, 5e and 5g, which are arranged in parallel to each other, into a predetermined number of turns in the same plane centering around the winding start portion.

Similarly, the winding 5T included in the differential winding 5 is formed by continuously winding a plurality of the conductors 5b, 5d, 5f and 5h, which are arranged in parallel to each other, into a predetermined number of turns in the same plane centering around the winding start portion. The winding 5T is wound in opposite direction to the winding 5S.

At the winding start portion of the winding 5S and at the winding start portion of the winding 5T, the conductor 5a is connected with the conductor 5b, the conductor 5c is connected with the conductor 5d, the conductor 5e is connected with the conductor 5f, and the conductor 5g is connected with the conductor 5h.

At the winding end portion of the winding 5S and at the winding end portion of the winding 5T, the conductor 5b is connected with the conductor 5c, the conductor 5d is connected with the conductor 5e, the conductor 5f is connected with the conductor 5g. A terminal 6c is drawn out from the connection point between the conductor 5b and the conductor 5c. A terminal 6d is drawn out from the connection point between the conductor 5d and the conductor 5e. A terminal 6e is drawn out from the connection point between the conductor 5f and the conductor 5g. A terminal 6f is connected to an end of the conductor 5h.

As described, since the terminals 6c, 6d and 6e are drawn out from the winding end portions located on the outer periphery of each conductor 5b, 5c, 5d, 5e, 5f and 5g, the out-drawing portion for each terminal becomes simple in structure, and thereby, the configuration of the differential winding 5 is simplified, which makes it possible to make the transformer 50 compact in size. It should be noted that the configuration of the differential winding 5 is not limited to the above, for example, it is acceptable to increase the number of the windings and draw out a terminal from each of the increased number of the windings.

In the transformer 50 according to the present exemplary embodiment, it is possible to connect the terminal 6z alternatively to any one of the terminals 6c, 6d, 6e and 6f by switching the switch 6.

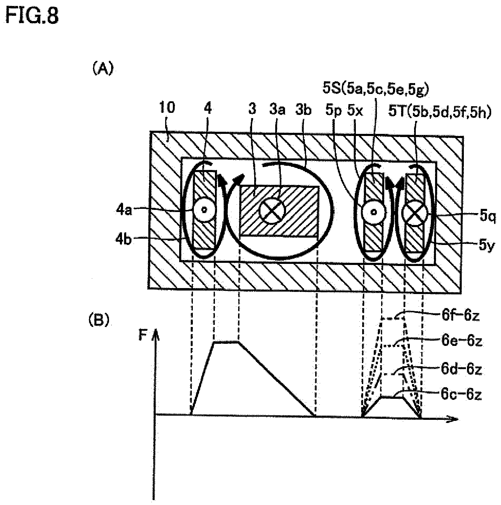

FIG. 8(A) is a sectional view which is viewed from a window of one of the cores and illustrates a magnetic flux generated in the transformer when the number of turns of the differential winding incorporated into the closed circuit is altered stepwise, and FIG. 8(B) is a graph illustrating a leakage flux generated in the core when the number of turns of the differential winding incorporated into the closed circuit is being altered stepwise. In FIG. 8(B), the vertical axis denotes the magnitude of leakage flux F, and the horizontal axis denotes positions corresponding to the core illustrated in FIG. 8(A).

In order to increase stepwise the number of turns of the differential winding 5 in the closed circuit, the terminal 6c, the terminal 6d, the terminal 6e, the terminal 6f are sequentially connected to the terminal 6z.

Accordingly, as illustrated in FIG. 8(A), AC current 5p flows in the winding 5S, which thereby generates leakage flux 5x. AC current 5q flows in the winding 5T, which thereby generates leakage flux 5y.

As illustrated in FIG. 8(B), as the number of turns of the differential winding 5 in the closed circuit is increased, leakage flux F generated in the core 10 increases. As a result, the reactance value of the transformer 50 becomes greater. Therefore, by connecting the terminal 6z through the switch 6 alternatively to any one of the terminals 6c, 6d, 6e and 6f, it is possible to modify the reactance of the transformer 50 easily.

In the present embodiment, it is configured that the plurality of the terminals 6c, 6d, 6e, and 6f are drawn out of the differential winding 5 to make it possible to alter the number of turns of the differential winding 5; however, as long as the differential coil 5 is connected in series to the secondary winding 4, it is possible to make the transformer device 100 compact in size while suppressing the occurrence of the inductive interferences. Thus, it is acceptable that the transformer device 100 may not include the switch 6.

It should be understood that the embodiments disclosed herein have been presented for the purpose of illustration and description but not limited in all aspects. It is intended that the scope of the present invention is not limited to the description above but defined by the scope of the claims and encompasses all modifications equivalent in scope to the claims.

### LIST OF REFERENCE SIGNS

- 1: elevated cable
- 2: pantograph
- 3: primary winding
- 4: secondary winding
- 3a, 4a, 5p, 5q: AC current
- 3b, 4b, 5x, 5y: leakage flux
- 5: differential winding
- 5S, 5T: winding
- 5a, 5b, 5c, 5d, 5e, 5f, 5g, 5h: conductor
- 6: switch
- 6a, 6b, 6c, 6d, 6e, 6f, 6z: terminal
- 7: converter
- 8: inverter
- 9: motor
- 10: core
- 10b: main magnetic flux
- 50: transformer
- 100: transformer device
- 200: railway vehicle

## Claims

1. A transformer (50) comprising:
- a core (10);
- a primary winding (3) wound about the core (10);
- a secondary winding (4) wound about the core (10) in parallel with the primary winding (3) comprising a first end (6a) and a second end (6b); and
- a differential winding (5) having one end connected to the second end (6b) of the secondary winding (4) to have a series connection with the secondary winding (4),
- the differential winding (5) being configured to include two windings (5S, 5T) wound about the core (10) at the same number of turns in opposite directions so as to prevent an inductive voltage from being generated between the one end (6b) of the differential winding (5) and another end (6c, 6d, 6e, 6f) of the differential winding (5).

2. The transformer (50) according to claim 1,
further comprising a switch (6) configured to connect selectively with the one end (6c) of the differential winding (5) or the another end (6c, 6d, 6e, 6f) of the differential winding (5) into a closed circuit including the secondary winding (4).

3. The transformer (50) according to claim 2,
wherein the differential winding (5) includes a plurality of terminals (6c to 6f) each capable of serving as the another end of the differential winding (5), and wherein the switch (6) is adapted to connect one terminal selected alternatively from the one end of the differential winding (5) and the plurality of terminals (6b to 6f) each capable of serving as the other end of the differential winding (5).

4. The transformer according to claim 3,
wherein
- each of the two windings (5S, 5T) of the differential winding (5) have a winding start portion and a winding end portion,
- the two windings (5S, 5T) are formed by continuously winding a plurality of conductors (5a, 5c, 5e, 5g, and 5b, 5d, 5f, 5h), which are arranged in parallel to each other, into a predetermined number of turns in the same plane centering around the winding start portion, respectively,
- the plurality of conductors (5a, 5c, 5e, 5g, and 5b, 5d, 5f, 5h) of each of the two windings (5S, 5T) are connected to each other at the winding start portion and at the winding end portion of the two windings (5S, 5T), respectively,
- an end of one winding of the two windings (5S, 5T) which are connected to each other is configured to serve as the one end of the differential winding (5),
- an end of the other winding of the two windings (5S, 5T) which are connected to each other is configured to serve as an end terminal among the plurality of terminals each capable of serving as the another end of the differential winding (5), and
- a terminal other than the end terminal among the plurality of terminals each capable of serving as the another end of the differential winding (5) is drawn out of a predetermined connection point among connection points between the plurality of conductors (5c, 5e, 5g and 5b, 5d, 5f) located at the winding end portions, respectively.

5. A transformer device (100), comprising
- the transformer (50) according to any of claims 1 to 4 and
- a converter (7) configured to convert an AC voltage generated in the secondary winding (4) into a DC voltage, the first input terminal of the converter (7) being connected to the first end (6a) of the secondary winding (4) and the second input terminal of the converter (7) being connectable to terminals (6b, 6c, 6d, 6e, 6f) of the differential winding (5).

6. The transformer device (100) according to claim 5,
further comprising an inverter (8) configured to convert the DC voltage converted by the converter (7) into a three-phase AC voltage.

7. The transformer device (100) according to claim 5 or 6
adapted to be mountable in an electric vehicle.

## Patentansprüche

1. Transformator (50), der Folgendes aufweist:
- einen Kern (10);
- eine Primärwicklung (3), die um den Kern (10) gewickelt ist;
- eine Sekundärwicklung (4), die parallel zu der Primärwicklung (3) um den Kern (10) gewickelt ist und ein erstes Ende (6a) und ein zweites Ende (6b) aufweist; und
- eine Differenzialwicklung (5), deren eines Ende mit dem zweiten Ende (6b) der Sekundärwicklung (4) verbunden ist, um eine Reihenschaltung mit der Sekundärwicklung (4) zu ermöglichen,
- wobei die Differenzialwicklung (5) dazu ausgebildet ist, dass sie zwei Wicklungen (5S, 5T) aufweist, die um den Kern (10) mit der gleichen Anzahl von Windungen in entgegengesetzten Richtungen gewickelt sind, um zu verhindern, dass eine induktive Spannung zwischen dem einen Ende (6b) der Differenzialwicklung (5) und dem anderen Ende (6c, 6d, 6e, 6f) der Differenzialwicklung (5) erzeugt wird.

2. Transformator (50) nach Anspruch 1,
der ferner einen Schalter (6) aufweist, der dazu ausgebildet ist, selektiv mit dem einen Ende (6c) der Differenzialwicklung (5) oder dem anderen Ende (6c, 6d, 6e, 6f) der Differenzialwicklung (5) eine Verbindung herzustellen, und zwar zu einem geschlossenen Kreis, der die Sekundärwicklung (4) aufweist.

3. Transformator (50) nach Anspruch 2,
wobei die Differenzialwicklung (5) eine Vielzahl von Anschlüssen (6c bis 6f) aufweist, die jeweils als das andere Ende der Differenzialwicklung (5) dienen können, und wobei der Schalter (6) dazu ausgebildet ist, einen Anschluss zu verbinden, der alternativ aus dem einen Ende der Differenzialwicklung (5) und der Vielzahl von Anschlüssen (6b bis 6f) ausgewählt wird, die jeweils als das andere Ende der Differenzialwicklung (5) dienen können.

4. Transformator nach Anspruch 3,
wobei
- jede der beiden Wicklungen (5S, 5T) der Differenzialwicklung (5) einen Wicklungs-Startbereich und einen Wicklungs-Endbereich aufweist,
- die beiden Wicklungen (5S, 5T) durch kontinuierliches Wickeln einer Vielzahl von Leitern (5a, 5c, 5e, 5g und 5b, 5d, 5f, 5h) ausgebildet werden, die parallel zueinander angeordnet sind, und zwar jeweils zu einer vorbestimmten Anzahl von Windungen in der gleichen Ebene, die um den Wicklungs-Startbereich zentriert ist,
- die Vielzahl von Leitern (5a, 5c, 5e, 5g und 5b, 5d, 5f, 5h) jeder der beiden Wicklungen (5S, 5T) am Wicklungs-Startbereich bzw. am Wicklungs-Endbereich der beiden Wicklungen (5S, 5T) miteinander verbunden sind,
- ein Ende der einen Wicklung der beiden miteinander verbundenen Wicklungen (5S, 5T) dazu ausgebildet ist, als das eine Ende der Differenzialwicklung (5) zu dienen,
- ein Ende der anderen Wicklung der beiden miteinander verbundenen Wicklungen (5S, 5T) dazu ausgebildet ist, als Endanschluss bei der Vielzahl von Anschlüssen zu dienen, die jeweils als das andere Ende der Differenzialwicklung (5) dienen können, und
- ein anderer Anschluss als der Endanschluss bei der Vielzahl von Anschlüssen, die jeweils als anderes Ende der Differenzialwicklung (5) dienen können, aus einem vorbestimmten Verbindungspunkt bei Verbindungspunkten zwischen der Vielzahl von Leitern (5c, 5e, 5g und 5b, 5d, 5d, 5f) herausgezogen wird, die jeweils an den Wicklungs-Endbereichen angeordnet sind.

5. Transformatorvorrichtung (100), die Folgendes aufweist
- den Transformator (50) nach einem der Ansprüche 1 bis 4 und
- einen Konverter (7), der dazu ausgebildet ist, eine in der Sekundärwicklung (4) erzeugte Wechselspannung in eine Gleichspannung umzuwandeln, wobei der erste Eingangsanschluss des Konverters (7) mit dem ersten Ende (6a) der Sekundärwicklung (4) verbunden ist und der zweite Eingangsanschluss des Konverters (7) mit den Anschlüssen (6b, 6c, 6d, 6e, 6e, 6f) der Differentialwicklung (5) verbindbar ist.

6. Die Transformatorvorrichtung (100) nach Anspruch 5,
die ferner einen Wechselrichter (8) aufweist, der dazu ausgebildet ist, die durch den Konverter (7) umgewandelte Gleichspannung in eine dreiphasige Wechselspannung umzuwandeln.

7. Die Transformatorvorrichtung (100) nach Anspruch 5 oder 6 die dazu ausgebildet ist, in einem Elektrofahrzeug montierbar zu sein.

## Revendications

1. Transformateur (50) comprenant :
- un noyau (10) ;
- un enroulement primaire (3) enroulé autour du noyau (10) ;
- un enroulement secondaire (4) enroulé autour du noyau (10) parallèlement à l'enroulement primaire (3) comprenant une première extrémité (6a) et une seconde extrémité (6b) ; et
- un enroulement différentiel (5) ayant une extrémité connectée à la seconde extrémité (6b) de l'enroulement secondaire (4) pour présenter une connexion en série avec l'enroulement secondaire (4),
- l'enroulement différentiel (5) étant configuré pour inclure deux enroulements (5S, 5T) enroulés autour du noyau (10) avec le même nombre de spires dans des directions opposées de manière à empêcher la génération d'une tension inductive entre une extrémité (6b) de l'enroulement différentiel (5) et une autre extrémité (6c, 6d, 6e, 6f) de l'enroulement différentiel (5).

2. Transformateur (50) selon la revendication 1,
comprenant en outre un commutateur (6) configuré pour être connecté sélectivement avec une première extrémité (6c) de l'enroulement différentiel (5) ou l'autre extrémité (6c, 6d, 6e, 6f) de l'enroulement différentiel (5) dans un circuit fermé incluant l'enroulement secondaire (4).

3. Transformateur (50) selon la revendication 2,
dans lequel l'enroulement différentiel (5) inclut une pluralité de bornes (6c à 6f) capables chacune de servir à titre d'autre extrémité de l'enroulement différentiel (5), et dans lequel le commutateur (6) est adapté pour connecter une borne sélectionnée alternativement parmi la première extrémité de l'enroulement différentiel (5) et la pluralité de bornes (6b à 6f) capables chacune de servir d'autre extrémité de l'enroulement différentiel (5).

4. Transformateur selon la revendication 3,
dans lequel
- chacun des deux enroulements (5S, 5T) de l'enroulement différentiel (5) comprend une portion de départ d'enroulement et une portion de fin d'enroulement,
- les deux enroulements (5S, 5T) sont formés en enroulant en continu une pluralité de conducteurs (5a, 5c, 5e, 5g, et 5b, 5d, 5f, 5h) qui sont agencés parallèlement les uns aux autres, en un nombre prédéterminé de spires dans le même plan centré autour de la portion de départ d'enroulement, respectivement,
- la pluralité de conducteurs (5a, 5c, 5e, 5g, et 5b, 5d, 5f, 5h) de chacun des deux enroulements (5S, 5T) sont connectés les uns aux autres au niveau de la portion de départ d'enroulement et de la portion de fin d'enroulement des deux enroulements (5S, 5T), respectivement,
- une extrémité d'un enroulement parmi les deux enroulements (5S, 5T) qui sont connectées l'un à l'autre est configurée pour servir de première extrémité de l'enroulement différentiel (5),
- une extrémité de l'autre enroulement parmi les deux enroulements (5S, 5T) qui sont connectés l'un à l'autre est configurée pour servir de borne terminale parmi la pluralité de bornes qui sont capables chacune de servir comme autre extrémité de l'enroulement différentiel (5), et
- une borne autre que la borne terminale parmi la pluralité de bornes qui sont capables chacune de servir comme autre extrémité de l'enroulement différentiel (5) est tirée depuis un point de connexion prédéterminé parmi les points de connexion entre la pluralité de conducteurs (5c, 5e, 5g, et 5b, 5d, 5f) situés au niveau des portions d'extrémité des enroulements, respectivement.

5. Dispositif transformateur (100) comprenant
- le transformateur (50) selon l'une quelconque des revendications 1 à 4, et
- un convertisseur (7) configuré pour convertir une tension en courant alternatif générée dans l'enroulement secondaire (4) en une tension en courant continu, la première borne d'entrée du convertisseur (7) étant connectée à la première extrémité (6a) de l'enroulement secondaire (4) et la seconde borne d'entrée du convertisseur (7) pouvant être connectée aux bornes (6b, 6c, 6d, 6e, 6f) de l'enroulement différentiel (5).

6. Dispositif transformateur (100) selon la revendication 5,
comprenant en outre un inverseur (8) configuré pour convertir la tension en courant continu convertie par le convertisseur (7) en une tension alternative triphasée.

7. Dispositif transformateur (100) selon la revendication 5 ou 6,
adapté pour être monté dans un véhicule électrique.
